Europäisches Patentamt

**(19)** European Patent Office

Office européen des brevets

(11) Publication number: **0 188 193**
**A2**

## (12) EUROPEAN PATENT APPLICATION

(21) Application number: **86100035.4**

(22) Date of filing: **02.01.86**

(51) Int. Cl.⁴: **H 04 N 1/40**

(30) Priority: **15.01.85 US 692007**

(43) Date of publication of application:
**23.07.86 Bulletin 86/30**

(84) Designated Contracting States:
**DE FR GB**

(71) Applicant: **International Business Machines Corporation**
**Old Orchard Road**
**Armonk, N.Y. 10504(US)**

(72) Inventor: **Pennebaker, William Boone**
**Crane Road**
**Carmel New York 10512(US)**

(72) Inventor: **Mitchell, Joan La Verne**
**7 Cherry Hill Circle**
**Ossining New York 10562(US)**

(74) Representative: **Ahlman, Bertel**
**IBM Svenska AB Box 962**
**S-18 109 Lidingö(SE)**

(54) **Method and apparatus for processing image data.**

(57) A method and apparatus for processing images using gray scale techniques includes means (40) for obtaining a histogram of levels in an image; means (42) for analyzing said histogram to identify one or more ranges of background in said image; means (44, 48, 52) for converting each of said ranges of background to a constant value to achieve flat backgrounds in said image; means for generating a dynamic range expansion table for each image; means for correcting said image data for dynamic range compression due to coring during processing of said image data by reference to said dynamic range expansion table. The process may also include means for encoding (54) said processed image using gray scale encoding techniques, means (46) for filtering all nonbackground pixels in said image, means for generating for said image a shading correction for each pixel in said image; means for correcting each pixel for shading employing said shading correction generated for each pixel, means for determining if said image is a graphics image; means for generating a dynamic range expansion table for each graphics image; means for correcting said image data for dynamic range compression by reference to said dynamic range expansion table, means for creating a second table of values from parameters contained in said encoded image data; and means for translating decoded image pixel values by reference to said second table to correct for quantization noise.

FIG. 4

RAW IMAGE
DATA INPUT

| HISTOGRAM GENERATOR | 40 |
| BKGD RANGE AND PEAK DETECTOR | 42 |
| SHADING CORRECTION MATRIX | 48 |
| SHADING CORRECTION ADDER | 52 |
| CLIP/CORE LOOKUP TABLE | 44 |
| NON—BACKGROUND DATA FILTER | 46 |
| DATA COMPRESSION ENCODER | 54 |

ENCODED
DATA OUTPUT

METHOD AND APPARATUS
FOR PROCESSING IMAGE DATA

The present invention relates to image data processing and more particularly to methods and apparatus for reducing objectionable background shading and noise in image data.

The following are systems representative of the prior art.

U.S. Patent 4,314,281 to Wiggins et al discloses inter alia a shading compensation system for scanning apparatus which includes a defocussed calibration strip which is scanned to provide shading signals for calibrating individual scanning elements of an array. The shading signals are processed in successive blocks each of which include a preset number of shading signals. Following processing, the shading signals are stored in memory and accessed during normal scanning. The shading signals are employed in operational modes to compensate the image signals produced by the scanner for deficiencies in scanning components.

U. S. Patent 3,743,772 to Pieters et al shows a method and apparatus for correcting shading distortion in a scanned video signal. The shading correction according to the patent provides multiple location storage for storing a signal indicative of the shading correction required at each of a number of selected, spaced apart points in a scannable region of the source signal and signal interpolation means is provided for interpolating between the stored values of corrections in both line and frame scan directions for other points in a region.

U. S. Patent 4,354,243 to Ryan et al teaches a shading error correction system in which correction signals are obtained during a first set up mode of the system which are then stored and interpolated and added to an image signal to provide a shading corrected image.

U. S. Patent 4,251,831 to Kamath teaches a system for processing discrete digitized samples presenting composite signals utilizing a filter which eliminates a periodic signal component from the composite signal. The patent includes a color or shading correction circuit for dealing with a problem known as "drop out" in television signal transmission.

U. S. Patent 4,326,258 to De LaGuardia shows a method and apparatus for reducing gray scale resolution of a document. The patent includes a high pass filter module for summing associated pixels within a window to produce a window sum as the window is moved along coordinates corresponding to the x and y axis and the high pass filter also includes means for comparing a selected pixels within a window with the associated window sum and predetermined criteria for generating first and second output values in accordance therewith.

Although the patents cited relates generally to modification of image data, the patents does not show a method and apparatus such as is claimed herein including correcting the image for noise in the background by coring the image to achieve a single background gray scale value derived from image data for each background region in an image.

The present invention is disclosed in the attached claims.

It is an object of the present invention to process image data using gray scale techniques including means for obtaining a histogram of levels in an image; means for analyzing said histogram to identify one or more ranges of background in said image; means for converting each of said ranges of background to a constant value to achieve flat backgrounds in said image.

It is another object of the present invention to process image data as above further including encoding said processed image using gray scale encoding techniques.

It is yet another object of the present invention to process image data as above further including means for filtering all nonbackground pixels in said image.

It is yet another object of the present invention to process image data as above further including means for generating for said image a shading correction for each pixel in said image; means for correcting each pixel for shading employing said shading correction generated for each pixel.

It is yet another object of the present invention to process image data as above further including means for determining if said image is a graphics image; means for generating a dynamic range expansion table for each graphics image; means for correcting said image data for dynamic range compression by reference to said dynamic range expansion table.

It is an advantage of the present invention that images having colored backgrounds may be deshaded to a single background value without losing color information.

It is yet another object of the present invention to process image data as above further including means for generating a dynamic range expansion table for each image; means for decoding said image data using an appropriate gray scale decoding algorithm; and means for correcting said image data for dynamic range compression by reference to said dynamic range expansion table.

It is an advantage of the present invention that shading and dynamic range compression due to lighting, camera characteristics and other causes may be eliminated by the method and apparatus according to the present invention.

It is another advantage of the present invention that the shading corrected image need not be analyzed prior to encoding therefore allowing encoding and correction steps to be overlapped which speeds the transmission of shading corrected images.

It is another advantage of the present invention that information on both sides of a background range of gray scale values in the image is preserved.

Accordingly, image data may be corrected by a method and apparatus using gray scale techniques including means for obtaining a histogram of gray scale levels in a graphics image; means for analyzing the histogram to identify one or more ranges of background in the image; means for generating a shading correction for each pixel in the image; means for correcting each pixel for shading employing the shading correction generated for each pixel; means for converting each of the ranges of background to a single gray scale value to achieve a flat background in the image; means for encoding the corrected graphics image using gray scale encoding techniques; and then transmitting the encoded image data to a receiver where the encoded image data is decoded and corrected for encoding quantization noise by a decoder including means for creating a table of correction values from parameters contained in the encoded image data; means for decoding the image data using a gray scale decoding algorithm; means for translating decoded image pixel values by reference to the table of correction values to correct for encoding quantization noise.

The foregoing and other objects, features and advantages of the invention will be apparent from the more particular description of the preferred embodiments of the invention, as illustrated in the accompanying drawing.

## BRIEF DESCRIPTION OF THE DRAWING

FIG. 1 is a block diagram of a system for performing the method according to the present invention.

FIG. 2.1 is a diagram of a histogram of an image having a background intensity range offset toward an extreme intensity value.

FIG. 2.2 is a diagram of a histogram of an image having a background with an intermediate intensity range.

FIG. 2.3 is a diagram of a histogram of an image as in Fig. 2.2 after background intensity value correction according to the present invention.

FIG. 2.4 is a diagram of a histogram of a chrominance component of a color image showing more than one background peak representing different color regions in the image before correction for nonuniformities in the backgrounds.

FIG. 2.5 is a diagram of a histogram of a chrominance component of a color image showing more than one background peak representing different color regions in the image after correction.

FIG. 3 is a flow chart of an embodiment of the image processing method according to the present invention.

FIG. 4 is a block diagram of apparatus embodying the image processor according to the present invention.

FIG. 5 is a flow chart of an embodiment of the decoding method according to the present invention.

FIG. 6 is a block diagram of apparatus embodying the decoder according to the present invention.

In the drawing, like elements are designated with similar reference numbers, and identical elements in different specific embodiments are designated by identical reference numbers.

DESCRIPTION OF PREFERRED EMBODIMENTS OF THE INVENTION

A video conferencing system is generally made up of at least two stations each of which includes some means for acquiring one or more images; a means for processing the image for efficient storage and transmission and a means for controlling communications between the image processor and the other stations in the video conference by telephone lines or the like.

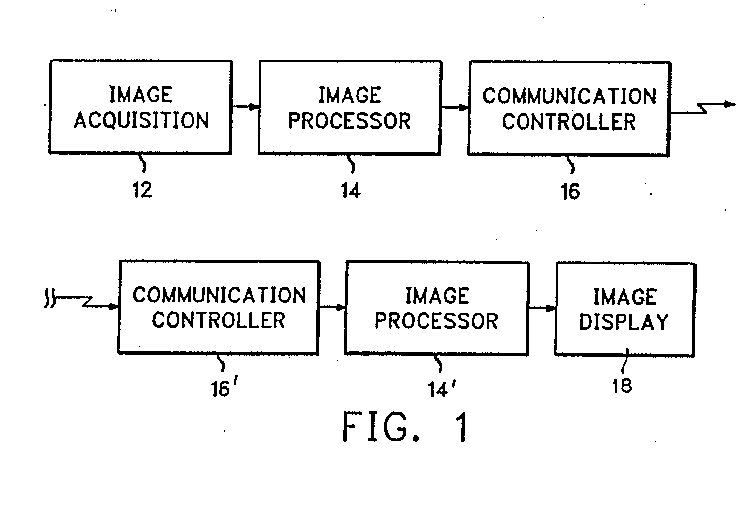

A block diagram of one such station is shown in FIG. 1 in which an image is acquired by an image acquisition device 12 such as by a vidicon camera or the like, processed by an image processor 14 such as a Motorola 68000 microprocessor controlled by a general purpose communications controller 16 such as an IBM Series/1. At the receiver another general purpose communications controller 16' controls another image processor 14' which processes the data. The output data may be fed to a suitable utilization device such as an image
display 18.

The image processor (14, 14') shown in FIG. 1, provides the
functions which make up the method and apparatus according
the the present invention.

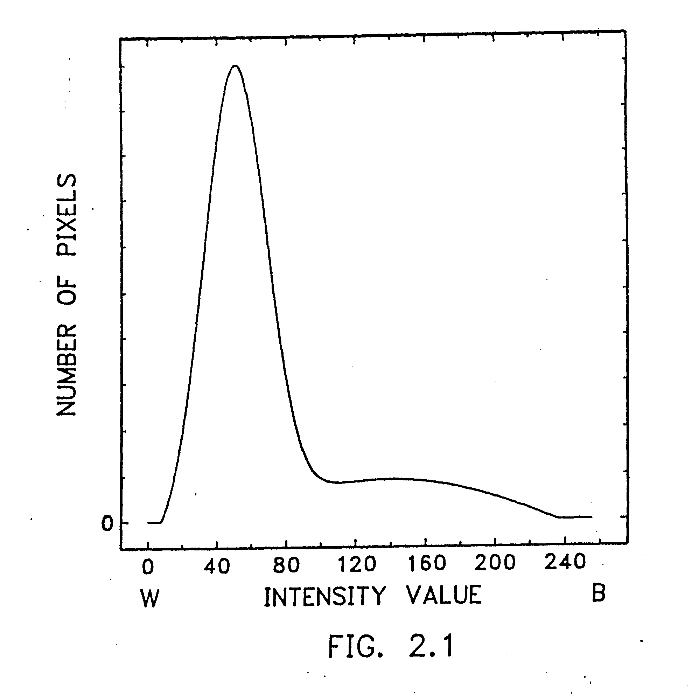

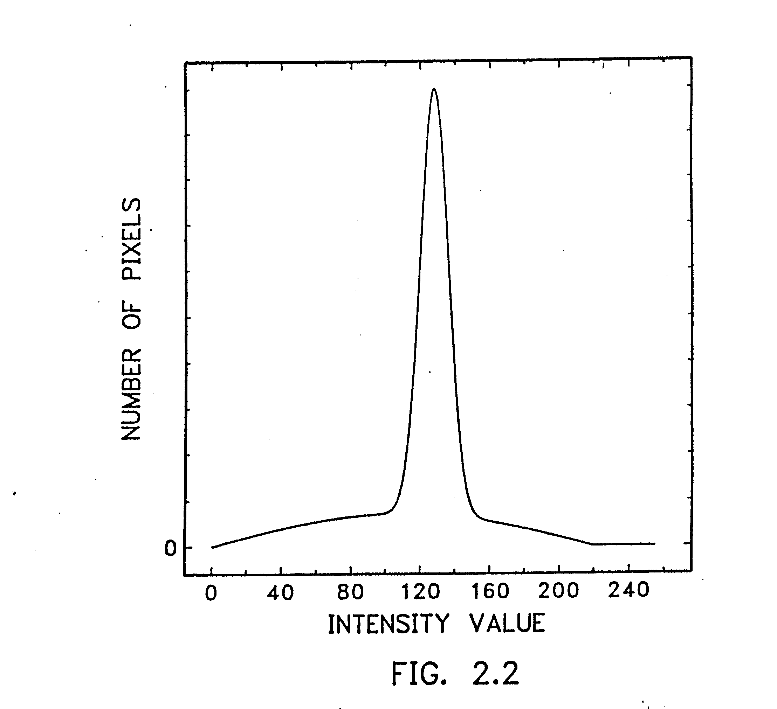

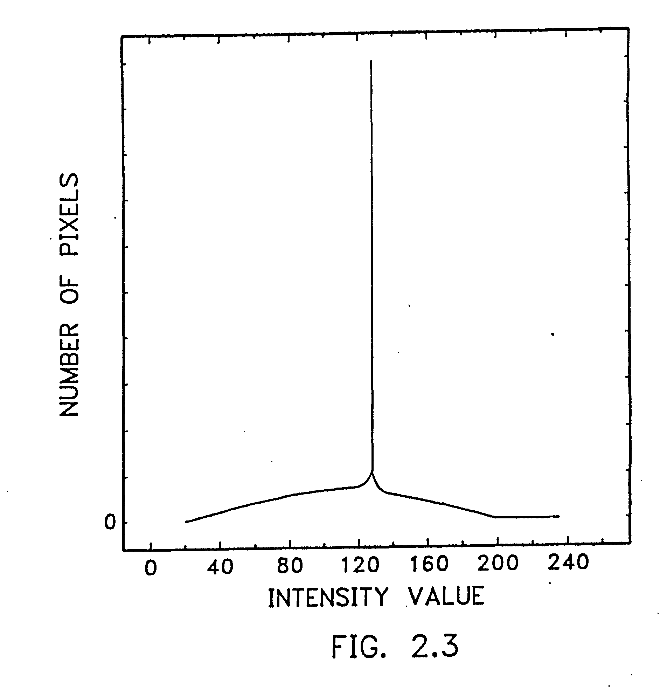

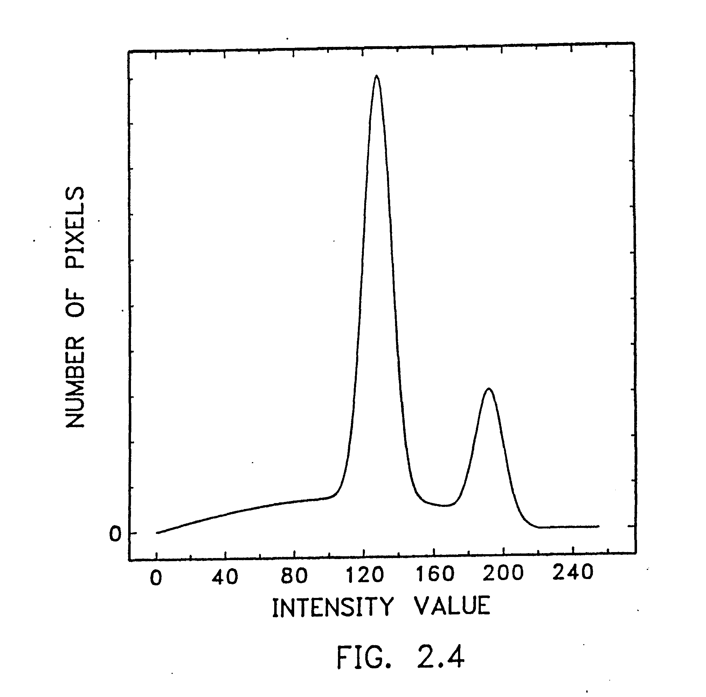

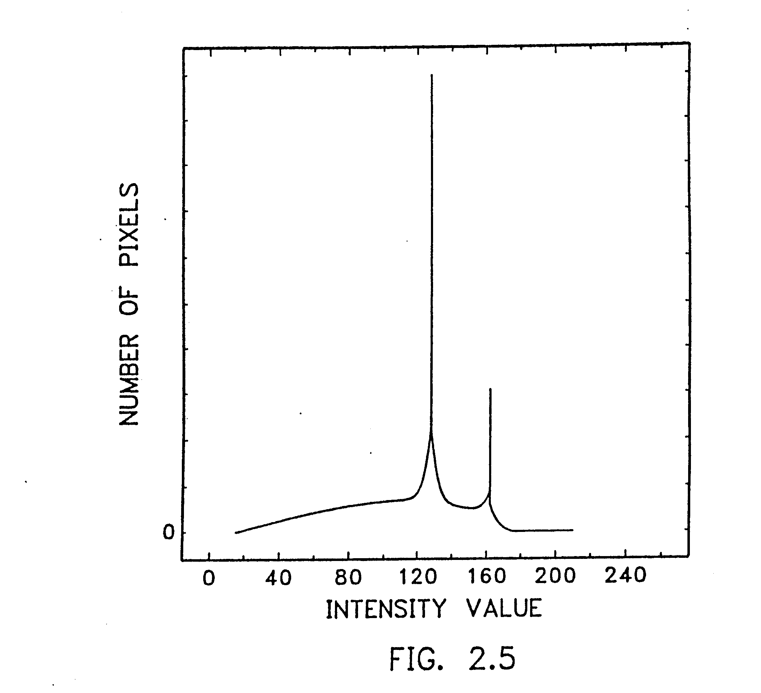

At the heart of the present invention is a histogram
analysis of the acquired image. Representative histograms
are shown in FIGS. 2.1, 2.2, 2.3, 2.4 and 2.5 and will be
described in further detail. The histogram of FIG. 2.1 shows
the distribution of number of pixels along the vertical axis
as compared to intensity value along the horizontal axis.
Assuming a black/white image with a nominally white background and black data thereon, the histogram of FIG. 2.1
would be representative of a black/white graphics image
having a large number of pixels with a near white gray scale
value, indicating the background of the document, and a much
smaller number of pixels at darker gray scale values indicating the graphics data on the document. Typically, 90% of
a graphics document may be considered background whereas 10%
or less contains information.

This is shown by the large peak near the white end of the
scale and the smaller value near the black end of the scale
as shown in FIG. 2.1.

By contrast, FIG. 2.2 shows a histogram of an image in which
the background peak occurs at some gray scale value substantially darker than the white level of FIG. 2.1 but not in
the blackest level which would indicate white data on a
black background. The histogram of FIG. 2.2 is most representative of a color document in which the background has a
definite color with an intermediate gray scale value.

In such a case, there may be data having gray scale values
of lower gray scale values than the background as well as data having higher gray scale values than the background. Thus, there will be information content on either side of the peak shown in FIG. 2.2.

Among other aspects of the present invention, it is intended to reduce the background gray scale level to substantially a single value as is shown in FIG. 2.3 with information carrying gray scale pixels both above and below the background peak along the axis of gray scale values.

The process of reducing the background peak to a single value may be referred to as "clipping" or "coring". Clipping is the process of reducing all values on one side of a peak to a single value, while coring is the process of selecting a predetermined range around a peak, reducing all values within the range to a single value while shifting values outside the range on both sides of the peak toward the peak to eliminate discontinuities in the image. Both terms will be used to refer to the process of determining a peak value for the background, determining edges of the background range and reducing the range of background values to a single value to eliminate noise in the background of a document. Clipping is a special case of coring where one side of the peak is an extreme value such as black or white. Clipping is used primarily on black/white images while coring is used on images having multiple colors.

Table I below shows the clipping of values on one side of a peak to a single value (a8) where the background range has been defined as plus or minus 30 units from the peak.

TABLE I

encoder clipping - delta = 30

```
1e 1f 20 21 22 23 24 25 26 27 28 29 2a 2b 2c 2d
2e 2f 30 31 32 33 34 35 36 37 38 39 3a 3b 3c 3d
3e 3f 40 41 42 43 44 45 46 47 48 49 4a 4b 4c 4d
4e 4f 50 51 52 53 54 55 56 57 58 59 5a 5b 5c 5d
5e 5f 60 61 62 63 64 65 66 67 68 69 6a 6b 6c 6d
6e 6f 70 71 72 73 74 75 76 77 78 79 7a 7b 7c 7d
7e 7f 80 81 82 83 84 85 86 87 88 89 8a 8b 8c 8d
8e 8f 90 91 92 93 94 95 96 97 98 99 9a 9b 9c 9d
9e 9f a0 a1 a2 a3 a4 a5 a6 a7 a8 a8 a8 a8 a8 a8
a8 a8 a8 a8 a8 a8 a8 a8 a8 a8 a8 a8 a8 a8 a8 a8
a8 a8 a8 a8 a8 a8 a8 a8 a8 a8 a8 a8 a8 a8 a8 a8
a8 a8 a8 a8 a8 a8 a8 a8 a8 a8 a8 a8 a8 a8 a8 a8
a8 a8 a8 a8 a8 a8 a8 a8 a8 a8 a8 a8 a8 a8 a8 a8
a8 a8 a8 a8 a8 a8 a8 a8 a8 a8 a8 a8 a8 a8 a8 a8
a8 a8 a8 a8 a8 a8 a8 a8 a8 a8 a8 a8 a8 a8 a8 a8
a8 a8 a8 a8 a8 a8 a8 a8 a8 a8 a8 a8 a8 a8 a8 a8
```

FIG. 2.4 and 2.5 show histograms of a chrominance component of a color image such as the R-Y or B-Y signal before (FIG. 2.4) and after (FIG. 2.5) coring correction for a multiple color background image. Note that the position of the peaks in the histogram along the horizontal axis represents different color intensity of the background colors.

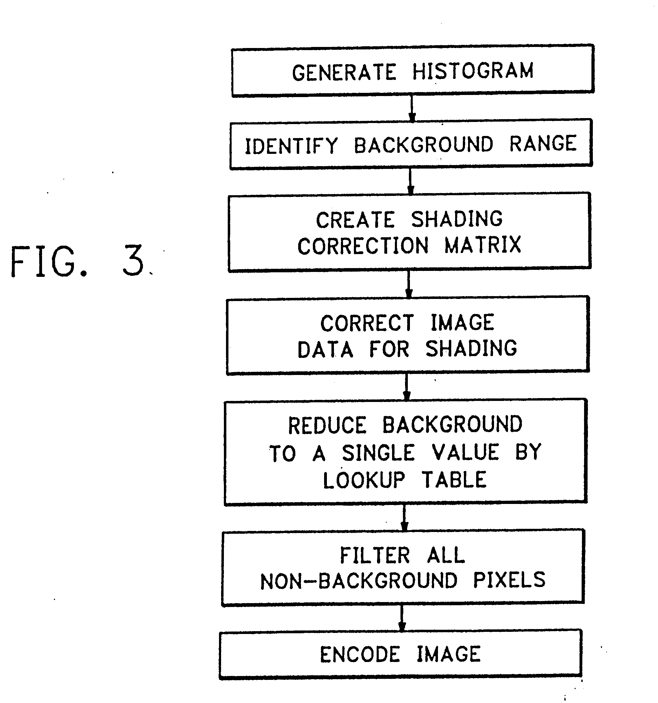

Referring now to FIG. 3, the encoding method according to the present invention will be described with reference to the flow chart. After an image to be processed is acquired by image acquisition means 12, (See FIG. 1) image processor 14 first generates a histogram such as shown in FIGS. 2.1, 2.2 or 2.4. Next, the histogram is analyzed to find the minimum, maximum, peak and edges of the background range.

Next, a shading correction matrix is created for the luminance signal Y in a color image or for the gray scale intensity signal in a black/white image by averaging pixels in a block such as 16 lines by 32 pixels by taking the average of every other pixel on a given line and averaging the sums obtained for every other line in the block. For the first block of 16 lines in the image, pixel gray scale values are clipped to fall within the background image. Then, beginning again at the start of the image, blocks of 16 by 32 pixels are averaged. The shading correction value derived from the previous block is used for each pixel whose value falls outside the background range gray scale values to avoid distortion of shading correction due to image regions having primarily image data outside the background region.

Due to discontinuities at the top and bottom and left and right edges of an image, the block averages from the top and bottom are replicated to provide approximate correction for the top and bottom edges of the image as are the block averages at the left and right edges of the image. A peak
gray scale value is subtracted from the average value
obtained above for each block to obtain a signed correction
to be combined with each pixel gray scale value in the image
to obtain a gray scale corrected image.

Next, a lookup table is generated to core a final corrected
image thus flattening the background to a single gray scale
level at the peak value of the background range. The table
also provides clipping at the extrema to keep the final
video output within a predetermined range such as 0 to 255.

The coring range can be assumed to be centered on the
background peak value. It has been demonstrated that the
corrected image is typically very sharply peaked with a
background range of plus and minus 5 units out of 255 units.
If the background range is broader in the corrected image,
the image is most likely not a graphics image and coring
should be done very conservatively. Therefore, no analysis
of the shading corrected image is needed. Since the coring
range is so narrow, the table is generated with unity slope
except in the clipping regions at the extremes and the
coring region in the background range and with no first
order discontinuities.

Table II below is used after shading correction. The background is expected to be sharply peaked.

TABLE II

encoder coring - delta = 5

```
05 06 07 08 09 0a 0b 0c 0d 0e 0f 10 11 12 13 14
15 16 17 18 19 1a 1b 1c 1d 1e 1f 20 21 22 23 24
25 26 27 28 29 2a 2b 2c 2d 2e 2f 30 31 32 33 34
35 36 37 38 39 3a 3b 3c 3d 3e 3f 40 41 42 43 44
45 46 47 48 49 4a 4b 4c 4d 4e 4f 50 51 52 53 54
55 56 57 58 59 5a 5b 5c 5d 5e 5f 60 61 62 63 64
65 66 67 68 69 6a 6b 6c 6d 6e 6f 70 71 72 73 74
75 76 77 78 79 7a 7b 7c 7d 7e 7f 80 81 82 83 84
85 86 87 88 89 8a 8b 8c 8d 8e 8f 90 91 92 93 94
95 96 97 98 99 9a 9b 9c 9d 9e 9f a0 a1 a2 a3 a4
a5 a6 a7 a8 a8 a8 a8 a8 a8 a8 a8 a8 a8 a8 a9 aa
ab ac ad ae af b0 b1 b2 b3 b4 b5 b6 b7 b8 b9 ba
bb bc bd be bf c0 c1 c2 c3 c4 c5 c6 c7 c8 c9 ca
cb cc cd ce cf d0 d1 d2 d3 d4 d5 d6 d7 d8 d9 da
db dc dd de df e0 e1 e2 e3 e4 e5 e6 e7 e8 e9 ea
eb ec ed ee ef f0 f1 f2 f3 f4 f5 f6 f7 f8 f9 fa
```

TABLE III

encoder coring - delta = 30

No shading correction - broad background  range.

```
1e 1f 20 21 22 23 24 25 26 27 28 29 2a 2b 2c 2d
2e 2f 30 31 32 33 34 35 36 37 38 39 3a 3b 3c 3d
3e 3f 40 41 42 43 44 45 46 47 48 49 4a 4b 4c 4d
4e 4f 50 51 52 53 54 55 56 57 58 59 5a 5b 5c 5d
5e 5f 60 61 62 63 64 65 66 67 68 69 6a 6b 6c 6d
6e 6f 70 71 72 73 74 75 76 77 78 79 7a 7b 7c 7d
7e 7f 80 81 82 83 84 85 86 87 88 89 8a 8b 8c 8d
8e 8f 90 91 92 93 94 95 96 97 98 99 9a 9b 9c 9d
9e 9f a0 a1 a2 a3 a4 a5 a6 a7 a8 a8 a8 a8 a8 a8
a8 a8 a8 a8 a8 a8 a8 a8 a8 a8 a8 a8 a8 a8 a8 a8
a8 a8 a8 a8 a8 a8 a8 a8 a8 a8 a8 a8 a8 a8 a8 a8
a8 a8 a8 a8 a8 a8 a8 a8 a8 a8 a8 a8 a8 a8 a8 a8
a8 a8 a8 a8 a8 a8 a8 a9 aa ab ac ad ae af b0 b1
b2 b3 b4 b5 b6 b7 b8 b9 ba bb bc bd be bf c0 c1
c2 c3 c4 c5 c6 c7 c8 c9 ca cb cc cd ce cf d0 d1
d2 d3 d4 d5 d6 d7 d8 d9 da db dc dd de df e0 e1
```

Next, the shading correction values generated above are combined with the pixel gray scale values to obtain the shading corrected image. Bilinear interpolation is employed on the correction matrix to obtain correction values for each pixel.

Next, a smoothing filter is applied to those pixels in the image having a gray scale value outside the background range;  that is, to pixels having image data content.  The smoothing filter may employ the technique shown in U. S. Patent 4,504 864.

The corrected image data is then encoded employing gray scale encoding techniques such as is shown in Anastassiou and Mitchell, U. S. Patent 4,369,463 and Mitchell and Pennebaker U. S. Patent 4,488,174.

The process described above with reference to FIGS. 3 generally relates to the correction and encoding of an image.

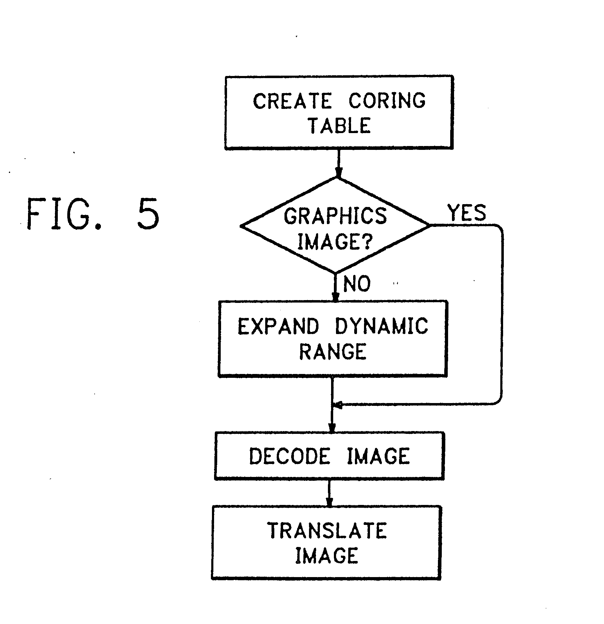

Additionally, at a receiver, the encoded image data is decoded by the method shown in FIG. 5. The image is then reconstructed and all pixels are remapped to match the dynamic range and image format of the receiving system. The output data is also slightly cored to reduce streaking in the received image.

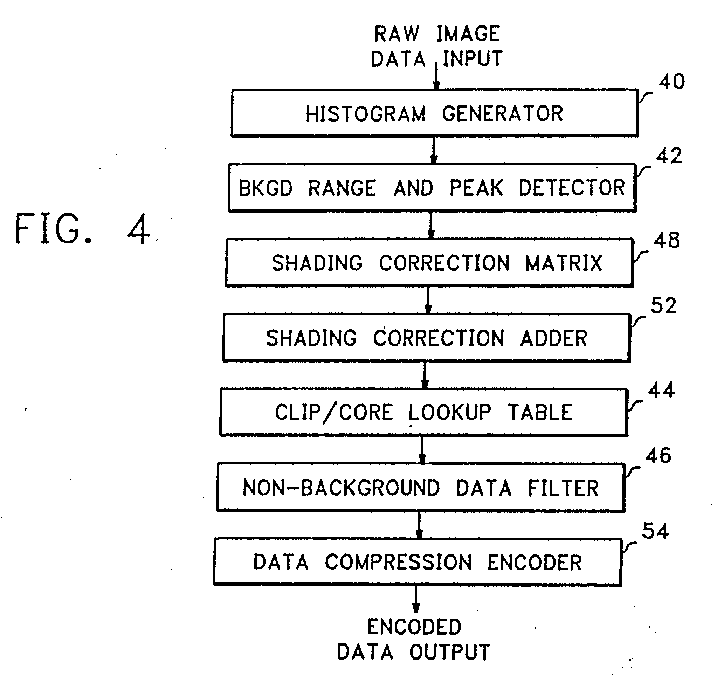

Referring now to FIG. 4, a block diagram of apparatus for performing the clipped shading correction and encoding according to the present invention is shown. Raw image data is input to a histogram generator 40 which provides outputs to a background range and peak detector 42. Peak detector 42 detects the limits of the background range and the gray scale value at peak of the background range. These values are provided to the shading correction matrix generator 48. The output of shading correction matrix is fed to correction adder 52 where it is added to the image data to achieve a shading corrected image. The shading corrected image is then fed to a coring lookup table 44 which generates a single intensity value at the peak of the background range to limit the background to a single intensity value for each background range in an image. The nonbackground graphics data is then filtered by a smoothing filter such as is described in U. S. Patent 4,504 864 and the smoothed data is then encoded by data compression encoder 54 and transmitted to a receiving station or stored for later use.

Referring now to FIG. 5, the decoding method at the receiver will be described.

Parameters contained in the encoded data received are used to create a coring table. This coring table is employed to reduce noise created during the encoding quantization process.

The data is next tested to determine whether the data is a graphics image or a gray scale image. If the data represents a graphics image, a dynamic range enhancement routine is then employed to stretch gray scale values to black and white extremes to correct for shifting in the coring or clipping process at the encoder. If the image is not a graphics image, the dynamic range enhancement routine is not employed.

Next, the image data is decoded pel by pel employing a well known gray scale decoding algorithm such as is shown in US Patent 4,369,463 and US Patent 4,488,174.

The decoded data is then translated by reference to the clipping table of Table IV or the coring table of Table V (depending on whether the image data was clipped or cored at the encoder) created from the received parameters to correct for the encoding quantization noise to achieve a reproduced image with a flat background. It should be noted that although a background range of 30 units may be selected at the encoder, the deviation from peak value received at the decoder will generally be within 5 units. Thus, Tables IV and V can handle the general case at the decoder.

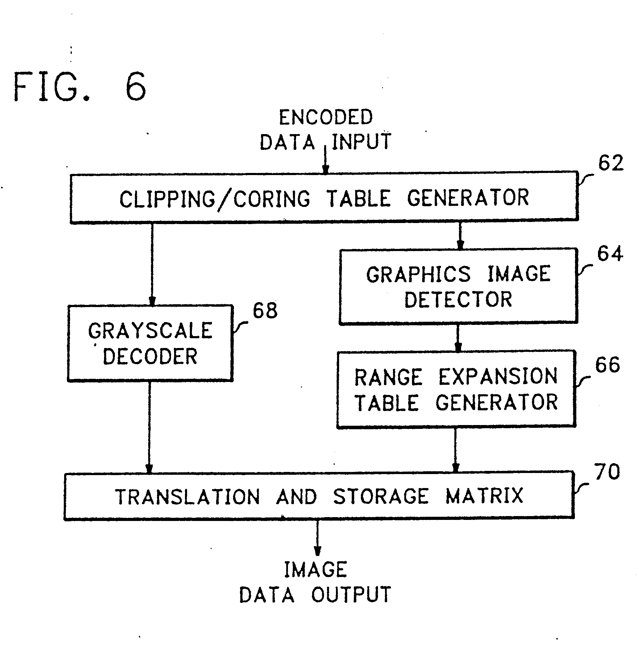

Referring now to FIG. 6, a block diagram of apparatus embodying the decoder according to the present invention will be described.

The encoded input data is fed to clipping/coring table generator 62 which creates the clipping and coring tables as shown in tables IV and V below. Table generator 62 has two sets of outputs. The first output is connected to gray scale decoder 68 and a second output to graphics image detector 64. The graphics image detector 64 has an output indicating a graphics image has been detected which is an input to range expansion table 66. Gray scale decoder 68 provides decoded image data to translation and storage matrix 70. Translation and storage matrix 70 also communicates directly with table generator 62 and range expansion table 66.

TABLE IV

decoder clipping - delta = 5

```
05 06 07 08 09 0a 0b 0c 0d 0e 0f 10 11 12 13 14
15 16 17 18 19 1a 1b 1c 1d 1e 1f 20 21 22 23 24
25 26 27 28 29 2a 2b 2c 2d 2e 2f 30 31 32 33 34
35 36 37 38 39 3a 3b 3c 3d 3e 3f 40 41 42 43 44
45 46 47 48 49 4a 4b 4c 4d 4e 4f 50 51 52 53 54
55 56 57 58 59 5a 5b 5c 5d 5e 5f 60 61 62 63 64
65 66 67 68 69 6a 6b 6c 6d 6e 6f 70 71 72 73 74
75 76 77 78 79 7a 7b 7c 7d 7e 7f 80 81 82 83 84
85 86 87 88 89 8a 8b 8c 8d 8e 8f 90 91 92 93 94
95 96 97 98 99 9a 9b 9c 9d 9e 9f a0 a1 a2 a3 a4
a5 a6 a7 a8 a8 a8 a8 a8 a8 a8 a8 a8 a8 a8 a8 a8
a8 a8 a8 a8 a8 a8 a8 a8 a8 a8 a8 a8 a8 a8 a8 a8
a8 a8 a8 a8 a8 a8 a8 a8 a8 a8 a8 a8 a8 a8 a8 a8
a8 a8 a8 a8 a8 a8 a8 a8 a8 a8 a8 a8 a8 a8 a8 a8
a8 a8 a8 a8 a8 a8 a8 a8 a8 a8 a8 a8 a8 a8 a8 a8
a8 a8 a8 a8 a8 a8 a8 a8 a8 a8 a8 a8 a8 a8 a8 a8
```

TABLE V

decoder coring – delta = 5

```
05 06 07 08 09 0a 0b 0c 0d 0e 0f 10 11 12 13 14
15 16 17 18 19 1a 1b 1c 1d 1e 1f 20 21 22 23 24
25 26 27 28 29 2a 2b 2c 2d 2e 2f 30 31 32 33 34
35 36 37 38 39 3a 3b 3c 3d 3e 3f 40 41 42 43 44
45 46 47 48 49 4a 4b 4c 4d 4e 4f 50 51 52 53 54
55 56 57 58 59 5a 5b 5c 5d 5e 5f 60 61 62 63 64
65 66 67 68 69 6a 6b 6c 6d 6e 6f 70 71 72 73 74
75 76 77 78 79 7a 7b 7c 7d 7e 7f 80 81 82 83 84
85 86 87 88 89 8a 8b 8c 8d 8e 8f 90 91 92 93 94
95 96 97 98 99 9a 9b 9c 9d 9e 9f a0 a1 a2 a3 a4
a5 a6 a7 a8 a8 a8 a8 a8 a8 a8 a8 a8 a8 a8 a9 aa
ab ac ad ae af b0 b1 b2 b3 b4 b5 b6 b7 b8 b9 ba
bb bc bd be bf c0 c1 c2 c3 c4 c5 c6 c7 c8 c9 ca
cb cc cd ce cf d0 d1 d2 d3 d4 d5 d6 d7 d8 d9 da
db dc dd de df e0 e1 e2 e3 e4 e5 e6 e7 e8 e9 ea
eb ec ed ee ef f0 f1 f2 f3 f4 f5 f6 f7 f8 f9 fa
```

As the image data is decoded, and decoded data is sent to translation and storage matrix 70, the translation and storage matrix 70 accesses table 62 and range expansion table 66 for graphics images to obtain translated corrected values for each decoded pixel in an image. These translated and corrected pixel values are then stored or displayed on a display screen (not shown).

The dynamic range expansion table 66 is implemented by TABLE VI below

TABLE VI

decoder dynamic range expansion table: sdel=35 (peg 0-35 at 0, 35-75 linear, 75-168 stretch to peg 168 at 168, stretch 168-220 so 220 at 255, peg 220-255 at 255)

```
00 00 00 00 00 00 00 00 00 00 00 00 00 00 00 00
00 00 00 00 00 00 00 00 00 00 00 00 00 00 00 00
00 00 00 00 01 02 03 04 05 06 07 08 09 0a 0b 0c
0d 0e 0f 10 11 12 13 14 15 16 17 18 19 1a 1b 1c
1d 1e 1f 20 22 23 24 26 27 28 2a 2b 2c 2e 2f 30
32 33 34 36 37 38 3a 3b 3c 3e 3f 40 42 43 44 46
47 48 4a 4b 4c 4e 4f 50 52 53 54 56 57 58 5a 5b
5c 5e 5f 60 62 63 65 66 67 69 6a 6b 6d 6e 6f 71
72 73 75 76 77 79 7a 7b 7d 7e 7f 81 82 83 85 86
87 89 8a 8b 8d 8e 8f 91 92 93 95 96 97 99 9a 9b
9d 9e 9f a1 a2 a3 a5 a6 a8 a9 ab ad ae b0 b2 b3
b5 b7 b8 ba bc bd bf c1 c2 c4 c6 c7 c9 cb cc ce
d0 d1 d3 d5 d6 d8 da db dd df e0 e2 e4 e5 e7 e9
ea ec ee ef f1 f3 f4 f6 f8 f9 fb fd ff ff ff ff
ff ff ff ff ff ff ff ff ff ff ff ff ff ff ff ff
ff ff ff ff ff ff ff ff ff ff ff ff ff ff ff ff
```

Alternatively, to eliminate one table lookup operation, per image, tables IV and VI are combined into table VII (below) for clipped images and tables V and VI are combined into table VIII (below) for cored images.

TABLE VII

decoder  dre (clipping detla=5)

```
00 00 00 00 00 00 00 00 00 00 00 00 00 00 00 00
00 00 00 00 00 00 00 00 00 00 00 00 00 00 00 01
02 03 04 05 06 07 08 09 0a 0b 0c 0d 0e 0f 10 11
12 13 14 15 16 17 18 19 1a 1b 1c 1d 1e 1f 20 22
23 24 26 27 28 2a 2b 2c 2e 2f 30 32 33 34 36 37
38 3a 3b 3c 3e 3f 40 42 43 44 46 47 48 4a 4b 4c
4e 4f 50 52 53 54 56 57 58 5a 5b 5c 5e 5f 60 62
63 65 66 67 69 6a 6b 6d 6e 6f 71 72 73 75 76 77
79 7a 7b 7d 7e 7f 81 82 83 85 86 87 89 8a 8b 8d
8e 8f 91 92 93 95 96 97 99 9a 9b 9d 9e 9f a1 a2
a3 a5 a6 a8 a8 a8 a8 a8 a8 a8 a8 a8 a8 a8 a8 a8
a8 a8 a8 a8 a8 a8 a8 a8 a8 a8 a8 a8 a8 a8 a8 a8
a8 a8 a8 a8 a8 a8 a8 a8 a8 a8 a8 a8 a8 a8 a8 a8
a8 a8 a8 a8 a8 a8 a8 a8 a8 a8 a8 a8 a8 a8 a8 a8
a8 a8 a8 a8 a8 a8 a8 a8 a8 a8 a8 a8 a8 a8 a8 a8
a8 a8 a8 a8 a8 a8 a8 a8 a8 a8 a8 a8 a8 a8 a8 a8
```

TABLE VIII decoder

stretch (coring delta=5)

```
00 00 00 00 00 00 00 00 00 00 00 00 00 00 00 00
00 00 00 00 00 00 00 00 00 00 00 00 00 00 00 01
02 03 04 05 06 07 08 09 0a 0b 0c 0d 0e 0f 10 11
12 13 14 15 16 17 18 19 1a 1b 1c 1d 1e 1f 20 22
23 24 26 27 28 2a 2b 2c 2e 2f 30 32 33 34 36 37
38 3a 3b 3c 3e 3f 40 42 43 44 46 47 48 4a 4b 4c
4e 4f 50 52 53 54 56 57 58 5a 5b 5c 5e 5f 60 62
63 65 66 67 69 6a 6b 6d 6e 6f 71 72 73 75 76 77
79 7a 7b 7d 7e 7f 81 82 83 85 86 87 89 8a 8b 8d
8e 8f 91 92 93 95 96 97 99 9a 9b 9d 9e 9f a1 a2
a3 a5 a6 a8 a8 a8 a8 a8 a8 a8 a8 a8 a8 a8 a9 ab
ad ae b0 b2 b3 b5 b7 b8 ba bc bd bf c1 c2 c4 c6
c7 c9 cb cc ce d0 d1 d3 d5 d6 d8 da db dd df e0
e2 e4 e5 e7 e9 ea ec ee ef f1 f3 f4 f6 f8 f9 fb
fd ff ff ff ff ff ff ff ff ff ff ff ff ff ff ff
ff ff ff ff ff ff ff ff ff ff ff ff ff ff ff ff
```

0188193

A detailed program embodiment of the method according to the present invention is described below.

```
function gethist fbbase(p);
  pointer b0sv;
  b0sv=b0
  vcuhist fbbase 12 468 3 12 500
  function vcuhist fbbase(p) y(h) ymax(h) dy(h) xst(h)
xstp(h);
    pointer b0sv b1sv b2sv;
    half hist(base b2);
    b0sv=b0
    b1sv=b1
    b2sv=b2
    yy=0
    b2=addr histbuf
    fill b2 0 512
    dd7=0
    b1=fbbase
    comhi=hex 35
    lncnt=expl -xstp xst
    lncnt=srl lncnt 1
    begin
      ylo=expl yy
      yhi=+ yh expl srl yy 8
      xlo=expl xst
      xhi=xh
      b1=+b1 14
      dd9=expl lncnt
      dd7=+dd7 dd9
      dd2=0
      dd9=-dd9 1
      label loop
        dd2=0
        dd2=dlo
        dd2=dlo
```

```
        ADD.W dd2,dd2
        ADDQ.W #1,0(b2,D2.W)
        DBRA dd9,.loop
      b1=-b1 14
      yy=+yy expl dy
      if yy_>expl ymax
        repeat
      endif
    endbegin
    cnt=expl dd7
    b0=b0sv
    b1=b1sv
    b2=b2sv
endfn
minmax
function minmax;
    b1=addr histbuf
    b0=b1
    dd9=0
    begin
      dd9=+ dd9 expl histdata
      b1=+ b1 2
      if dd9 llt 32
        repeat
      endif
    endbegin
    begin
      if histdata>0
        b1=- b1 2
        if b1 lgt b0
          repeat
        endif
      endif
    endbegin
    min= srl expl - b1 expl b0 1
    b0=+ b0 510
    b1=b0
```

```
    dd9=expl histdata
    begin
      if dd9 llt  32
        b1=- b1 2
        dd9=+ dd9 expl histdata
        repeat
      endif
    endbegin
    begin
      if histdata>0
        b1=+ b1 2
        if b1 llt b0
          repeat
        endif
      endif
    endbegin
    max= srl expl - b1 expl -b0 510 1
    if max lgt 255 max=255 endif
    if min lgt 255 min=0 endif
    if min > max min=max endif
  endfn
median
function median;
  dd8=expl srl cnt 1
  b0=addr histbuf
  b1=+b0 510
  dd9=expl histdata
  begin
    if dd9 llt dd8
      b1=- b1 2
      dd9=+ dd9 expl histdata
      repeat
    endif
  endbegin
  med=expl srl expl - b1 expl b0 1
  if med lgt 255 med=255 endif
endfn
```

```
peakedge
function peakedge;
   b1=addr histbuf
   dd2=expl ++++histdata histdata2 histdata4 histdata6
histdata8
   dd9=0
   b0=+b1 500
   begin
     if dd2 lgt dd9
       dd9=dd2
       b2=b1
     endif
     dd2=+dd2 expl histdata10
     dd2=-dd2 expl histdata
     b1=+b1 2
     if b1 lle b0
       repeat
     endif
   endbegin
   fndedge 3
   function fndedge edgedef(w);
     b1=b2
     dd2=dd9
     dd7=dd9
     dd7=srl expl dd7 edgedef
     b0=+addr histbuf 500
     begin
       if b1 lle b0
         dd2=+dd2 expl histdata10
         dd2=-dd2 expl histdata
         b1=+b1 2
         if dd2 lgt dd7
           repeat
         endif
       endif
     endbegin
     dd8=-expl b1 2
```

```
       dd2=dd9
       b1=b2
       b0=addr histbuf
       begin
          if b1 lgt b0
            b1=-b1 2
            dd2=+dd2 expl histdata
            dd2=-dd2 expl histdata10
            if dd2 lgt dd7
               repeat
            endif
          endif
       endbegin
       dd7= srl -dd8 expl b0 1
       dd8= srl expl -b1 expl b0 1
       dd2=dd7
       dif=expl srl -dd2 dd8 1
       dd2= expl srl +dd7 dd8 1
       dd2=+dd2  2
       ehi=expl +dd2 expl dif
       elo=expl -dd2 expl dif
       if ehi lgt 255 ehi=255 endif
       if elo lgt 255 elo=0 endif
    endfn
    if -max min < sll dif 2
       fndedge 2
       if -max min < sll dif 2
         fndedge 1
       endif
    endif
    peak=+srl expl -b2 expl addr histbuf 1 2
    if min > peak peak=min endif
    if max < peak peak=max endif
    dd9=0
    b1=+b1 4
    b0=+b1 expl sll dif 2
    begin
```

```
      dd9=+dd9 expl histdata
      b1=+b1 2
      if b1 lle b0
        repeat
      endif
    endbegin
    peakpc=percent expl cnt expl dd9
    function percent num(w) denom(w);
      dd9=expl denom
      dd8=dd9
      dd8=sll dd8 2
      dd7=dd8
      dd7=sll dd7 3
      dd9=dd7
      dd9=+dd9 dd8
      dd7=sll dd7 1
      dd9=+dd9 dd7
      dd8=expl num
      begin
        if dd8 lgt hex ffff
          dd8=srl dd8 1
          dd9=srl dd9 1
          repeat
        endif
      endbegin
      if dd8_=0
        DIVU dd8,dd9
        return ashalf expl dd9
      else
        return ashalf 100
      endif
    endfn
  endfn
b0=b0sv endfn function shdget fbbase(p);
pointer b0sv b1sv b2sv;
b0sv=b0
b1sv=b1
```

```
b2sv=b2
b1=fbbase
firstblk
function firstblk;
  static
  half tembuf(32);
  comhi=hex 35
  comlo=0
  fill tembuf 0 64
  dd7=expl elo
  dd9=expa -ehi elo
  b0=+addr tembuf 32
  yy=0
  yblk=14
  begin
    b2=-b0 32
    ylo=expl yy
    yhi=+yh expl srl yy 8
    xlo=0    .
    xhi=xh
    b1=+b1 14
    dd1=0
    begin
      replace twopix0;
        dd2=0
        dd2=dlo
        dd2=dlo
        dd2=-dd2 dd7
        if dd2 lgt dd9
          if dd2>0 dd2=dd9 else dd2=0 endif
        endif
      endrepl
      replace twopix1;
        dd1=dlo
        dd1=dlo
        dd1=-dd1 dd7
        if dd1 lgt dd9
```

```
    if dd1>0
      dd2=+dd2 dd9
    endif
    dd1=0
  else
    dd2=+dd2 dd1
  endif
endrepl
twopix0
twopix1
twopix1
twopix1
twopix1
twopix1
twopix1
twopix1
twopix1
twopix1
twopix1
twopix1
twopix1
twopix1
twopix1
twopix1
twopix1
dd2=srl dd2 4
tshd0=+tshd0 expl dd2
b2=+b2 2
if yy = yblk
   tshdm1=srl tshdm1 3
endif
if b2 llt b0
   repeat
endif
endbegin
b1=-b1 14
if yy < yblk
  yy=+yy 2
```

```
      repeat
    endif
  endbegin
endfn
yy=0
begin
  if yy<478
    b1=fbbase
    midblk
    function midblk;
      dd7=expl elo
      dd9=expa -ehi elo
      b0=+Gfirstblk 64
      yblk=+yy 14
      begin
        b2=-b0 32
        ylo=expl yy
        yhi=+yh expl srl yy 8
        xlo=0
        xhi=xh
        b1=+b1 14
        dd1=0
        dd8=0
        begin
          dd8=oldtshd0
          replace twopix0;
            dd2=0
            dd2=dlo
            dd2=dlo
            dd2=-dd2 dd7
            if dd2 lgt dd9
              dd2=dd8
            endif
          endrepl
          replace twopix1;
            dd1=dlo
            dd1=dlo
```

```
      dd1=-dd1 dd7
      if dd1 lgt dd9
        dd1=0
        dd2=+dd2 dd8
      else
        dd2=+dd2 dd1
      endif
    endrepl
    twopix0
    twopix1
    twopix1
    twopix1
    twopix1
    twopix1
    twopix1
    twopix1
    twopix1
    twopix1
    twopix1
    twopix1
    twopix1
    twopix1
    twopix1
    twopix1
    dd2=srl dd2 4
    tshd0=+tshd0 expl dd2
    b2=+b2 2
    if yy = yblk
      tshdm1=srl tshdm1 3
    endif
    if b2 llt b0
      repeat
    endif
  endbegin
  b1=-b1 14
  if yy < yblk
    yy=+yy 2
```

```
        repeat
      endif
    endbegin
    yy=+yy 2
    b2=-b2 32
    b1= expl sll srl yy 4 4
    b1=+b1 expl addr shdbuf
    dd8=dd7
    dd8=-dd8 expl peak
    begin
      dd2=expl tshd0
      tshd0=0
      oldtshd0=expl dd2
      b2=+b2 2
      dd2=+dd2 dd8
      data1b=expl dd2
      b1=+b1 1
      if b2 llt b0
        repeat
      endif
    endbegin
  endfn
  repeat
endif
endbegin
b2=addr shdbuf
b1=+b2 16
begin
  shdc0=shdc16
  shdc496=shdc480
  b2=+b2 1
  if b2 llt b1
    repeat
  endif
endbegin
b0=b0sv
b1=b1sv
```

```
b2=b2sv endfn function coretbl;
pointer b0sv b1sv;
static
half diff;
init diff 5;

b0sv=b0
b1sv=b1
(generate coring table from -128 to + 256 128)
fill cortbl 0 expl -128 diff
b0=+addr cortbl expl -128 diff
dd8=expl peak
dd9=0
begin
  data0b=expl dd9
  b0=+b0 1
  dd9=+dd9 1
  if dd9 llt dd8
    repeat
  endif
endbegin
fill b0 expl dd8 expl +diff diff
dd8=255
b0=+b0 expl +diff diff
begin
  data0b=expl dd9
  b0=+b0 1
  dd9=+dd9 1
  if dd9 llt dd8
    repeat
  endif
endbegin
fill b0 255 expl -+addr cortbl 512 expl b0
b0=b0sv
b1=b1sv endfn function shdcor fbbase(p) yy(h) databuf(p);
pointer b0sv b1sv b2sv;
```

```
b0sv=b0
b1sv=b1
b2sv=b2
yy=and hex 1ff yy
if _ (yy_<ymax) (yy<ymin)
   vinterp and hex 1f8 yy
endif
b1=fbbase
comhi=hex 35
comlo=0
xlo=0
xhi=xh
ylo=expl and hex ff yy
yhi=expl and 1 srl yy 8
b2=expl sll and +yy 8 hex f 1
b2=+b2 sll expl b2 3
b2=+addr tbuf expl b2
b0=databuf
b0lim=+databuf 1024
b1=+b1 14
a0sv=A0
a1sv=A1
MOVE.B shdc0+,dd2
EXT.W dd2
MOVE.W dd2,A0
dd0=expl +addr filtbl 256
MOVE.L dd0,A1
dd0=expl +addr cortbl 128
MOVE dd0,A3;
MOVEQ.L _0,D7
MOVEQ.L _0,dd0
MOVE.B dlo,dd0
MOVEQ.L _0,dd9
begin
   MOVE.W A0,dd8
   MOVE.B shdc0+,dd2
   EXT.W  dd2
```

```
      MOVE.W dd2,A0
      call block16
      MOVE.W A0,dd8
      MOVE.B shdc0,dd2
      EXT.W  dd2
      ADD.W  dd8,dd2
      ASR.W  _$1,dd2
      MOVE.W dd2,A0
      call block16
      if b0 llt b0lim
        repeat
      else
        b0=-b0 2
        if dataout0_=expl peak
          ASR.W _2,D7
          SUB.W D7,dd9
          MOVE.B 0(A3,dd9.W),dataout0
        endif
      endif
    endbegin
    A0=a0sv
    A1=a1sv
    b0=b0sv
    b1=b1sv
    b2=b2sv
    subr block16
      replace teste cor(t)
        MOVEQ _0,dd9
        MOVE.B dlo,dd9
        MOVE.W dd9,D6
        SUB.W dd0,D6
        MOVE.B 0(A1,D6.W),D6
        EXT.W D6
        SUB.W D6,D7
        ASR.W _2,D7
        SUB.W D7,dd0
        SUB.W cor,dd0
```

```
      MOVE.B 0(A3,dd0.W),dataout0
      ADDQ.L _2,b0
endrepl
replace testo cor(t)
      MOVEQ _0,dd0
      MOVE.B dlo,dd0
      MOVE.W dd0,D7
      SUB.W dd9,D7
      MOVE.B 0(A1,D7.W),D7
      EXT.W D7
      SUB.W D7,D6
      ASR.W _2,D6
      SUB.W D6,dd9
      SUB.W cor,dd9
      MOVE.B 0(A3,dd9.W),dataout0
      ADDQ.L _2,b0
endrepl
teste dd8
MOVE.W dd8,dd7
ADD.W A0,dd7
ASR.W _1,dd7
MOVE.W A0,dd2
SUB.W dd8,dd2
ADDQ.W _4,dd2
CMP.W _8,dd2
BLS .tminn
MOVE.W dd7,dd2
ADD.W dd8,dd2
ASR.W _1,dd2
MOVE.W dd2,dd1
ADD.W dd8,dd1
ASR.W _1,dd1
ADD.W dd1,dd8
ASR.W _1,dd8
testo dd8
teste dd1
ADD.W dd2,dd1
```

```
ASR.W _1,dd1
testo dd1
teste dd2
MOVE.W dd2,dd8
ADD.W dd7,dd8
ASR.W _1,dd8
ADD.W dd8,dd2
ASR.W _1,dd2
testo dd2
teste dd8
ADD.W dd7,dd8
ASR.W _1,dd8
testo dd8
teste dd7
MOVE.W dd7,dd8
ADD.W A0,dd8
ASR.W _1,dd8
MOVE.W dd7,dd2
ADD.W dd8,dd2
ASR.W _1,dd2
ADD.W dd2,dd7
ASR.W _1,dd7
testo dd7
teste dd2
ADD.W dd8,dd2
ASR.W _1,dd2
testo dd2
teste dd8
MOVE.W dd8,dd2
ADD.W A0,dd2
ASR.W _1,dd2
ADD.W dd2,dd8
ASR.W _1,dd8
testo dd8
teste dd2
ADD.W A0,dd2
ASR.W _1,dd2
```

```
        testo dd2
        retrn
label tminn
        testo dd8
        teste dd8
        testo dd8
        ADD.W dd7,dd8
        ASR.W _1,dd8
        teste dd8
        testo dd8
        teste dd8
        testo dd8
        teste dd7
        testo dd7
        teste dd7
        testo dd7
        ADD.W A0,dd7
        ASR.W _1,dd7
        teste dd7
        testo dd7
        teste dd7
        testo dd7
    endsubr endfn endfn
```

0188193

CLAIMS

1.  A method for processing image data, characterized by
the steps of:

obtaining a histogram of intensity levels in an image;

analyzing the histogram to identify one or more ranges of
background in the image;

converting each of the ranges of background to a single
value to achieve a constant intensity for each of the ranges
in said image.

2.  A method for processing image data according to claim 1
further comprising the step of:

encoding the processed image using gray scale encoding
techniques.

3.  A method for processing image data according to claim 1
further comprising the step of:

filtering all nonbackground pixels in the image.

4.  A method for processing image data according to claim 1
wherein said step of analyzing the histogram further comprises the steps of:

determining edge intensity values for each background range
and determining a peak intensity value for each background
range.

5. A method for processing image data according to claim 1 further comprising the steps of:

generating for the image a shading correction for each pixel in the image;

correcting each pixel for shading employing the shading correction generated for each pixel.

6. A method for processing image data according to claim 5 wherein the step of generating a shading correction further comprises the steps of:

testing value of predetermined pixels in a block to determine if the value falls within a background range;

assigning a value equal to an average value of a previous block to those predetermined pixels in said block having a value outside the background range;

averaging values of pixels having values within the background range with assigned values of the pixels to obtain a block average value;

offsetting the average intensity values by the peak background value to obtain signed pixel shading corrections.

7. A method for processing image data according to claim 5 or 6 wherein the step of generating a shading correction further comprises the step of:

generating a previous block average value for a first block of pixels by assigning a value of a closest background edge value to those predetermined pixels within the first block which fall outside the background range.

8. A Method for processing image data according to claim 6 further comprising the step of:

interpolating a shading correction for each pixel from said block averages.

9. A method for processing image data according to claim 1 further comprising the steps of:

determining if the image is a graphics image;

generating a dynamic range expansion table for each graphics image;

correcting the image data for dynamic range compression by reference to said dynamic range expansion table.

10. A method for decoding encoded image data characterized by the steps of:
generating a dynamic range expansion table for each image;

decoding the image data using an appropriate gray scale decoding algorithm;

correcting the image data for dynamic range compression by reference to said dynamic range expansion table.

0188193

11. A Method for decoding encoded image data according to claim 10 further comprising the steps of:

creating a second table of values from parameters contained in said encoded image data;

translating decoded image pixel values by reference to the second table to correct for quantization noise.

12. Apparatus for processing image data, characterized by: means (40) for obtaining a histogram of intensity levels in an image;

means (42) for analysing the histogram to identify one or more ranges of background in said image;

means (44, 48, 52) for converting each of said ranges of background to a single value to achieve a constant intensity for each of said ranges in said image.

13. Apparatus for processing image data according to claim 14 further comprising:

means (46) for filtering all nonbackground pixels in the image;

means for (54) encoding the processed image using gray scale encoding techniques.

14. Apparatus for processing image data according to claim 12 wherein said means for analyzing the histogram further comprises means for determining edge intensity values for each background range and means for determining a peak intensity value for each background range.

0188193

15. Apparatus for decoding encoded image data characterized by means (66) for generating a dynamic range expansion table for each image;

means (68) for decoding said image data using an appropriate gray scale decoding algorithm; and means for correcting said image data for dynamic range compression by reference to said dynamic range expansion table.

16. Apparatus for decoding encoded image data according to claim 15 further comprising:

means for creating a second table of values from parameters contained in said encoded image data; and means for translating decoded image pixel values by reference to the second table to correct for quantization noise.

FIG. 1

FIG. 2.1

0188193

0188193

INTENSITY VALUE

NUMBER OF PIXELS

FIG. 2.2

FIG. 2.3

0188193

FIG. 2.4

0188193

FIG. 2.5

FIG. 3.

```
┌─────────────────────────────┐
│     GENERATE HISTOGRAM       │
└─────────────────────────────┘
               │
               ▼
┌─────────────────────────────┐
│  IDENTIFY BACKGROUND RANGE   │
└─────────────────────────────┘
               │
               ▼
┌─────────────────────────────┐
│       CREATE SHADING         │
│     CORRECTION MATRIX        │
└─────────────────────────────┘
               │
               ▼
┌─────────────────────────────┐
│        CORRECT IMAGE         │
│      DATA FOR SHADING        │
└─────────────────────────────┘
               │
               ▼
┌─────────────────────────────┐
│     REDUCE BACKGROUND        │
│   TO A SINGLE VALUE BY       │
│       LOOKUP TABLE           │
└─────────────────────────────┘
               │
               ▼
┌─────────────────────────────┐
│         FILTER ALL           │
│   NON-BACKGROUND PIXELS      │
└─────────────────────────────┘
               │
               ▼
┌─────────────────────────────┐
│        ENCODE IMAGE          │
└─────────────────────────────┘
```

0188193

RAW IMAGE
DATA INPUT

FIG. 4

| HISTOGRAM GENERATOR | 40 |

| BKGD RANGE AND PEAK DETECTOR | 42 |

| SHADING CORRECTION MATRIX | 48 |

| SHADING CORRECTION ADDER | 52 |

| CLIP/CORE LOOKUP TABLE | 44 |

| NON-BACKGROUND DATA FILTER | 46 |

| DATA COMPRESSION ENCODER | 54 |

ENCODED
DATA OUTPUT

0188193

FIG. 5

```
          ┌─────────────────┐
          │  CREATE  CORING │
          │      TABLE      │
          └─────────────────┘
                   │
                   ▼
              ╱─────────╲        YES
             ╱ GRAPHICS  ╲──────────┐
             ╲  IMAGE?   ╱          │
              ╲─────────╱           │
                   │ NO             │
                   ▼                │
          ┌─────────────────┐       │
          │ EXPAND  DYNAMIC │       │
          │      RANGE      │       │
          └─────────────────┘       │
                   │                │
                   ▼                │
                   ◄────────────────┘
                   │
                   ▼
          ┌─────────────────┐
          │  DECODE  IMAGE  │
          └─────────────────┘
                   │
                   ▼
          ┌─────────────────┐
          │    TRANSLATE    │
          │      IMAGE      │
          └─────────────────┘
```

9/10

0188193

# FIG. 6

ENCODED
DATA INPUT

CLIPPING/CORING TABLE GENERATOR — 62

GRAPHICS IMAGE
DETECTOR — 64

GRAYSCALE
DECODER — 68

RANGE EXPANSION
TABLE GENERATOR — 66

TRANSLATION AND STORAGE MATRIX — 70

IMAGE
DATA OUTPUT